# EUROPÄISCHE PATENTSCHRIFT

(11) **EP 2 626 607 B1**
(45) Veröffentlichungstag und Bekanntmachung des Hinweises auf die Patenterteilung: **04.04.2018**
(21) Anmeldenummer: 13000657.0
(22) Anmeldetag: 08.02.2013
(51) Int. Cl.: F16K 11/074

(54) **Vakuumventil**
Vacuum valve
Soupape à vide

(30) Priorität: 09.02.2012 DE 102012002420
(43) Veröffentlichungstag der Anmeldung: 14.08.2013
(73) Patentinhaber: BÖWE SYSTEC GmbH, 86159 Augsburg (DE)
(72) Erfinder: Grützmacher, Frank, 46286 Dorsten (DE)
(74) Vertreter: Charrier Rapp & Liebau

(56) Entgegenhaltungen:
- DE-A1- 10 310 662
- US-A- 2 622 512
- US-A- 2 655 179
- US-A1- 2011 042 886

## Beschreibung

Die Erfindung betrifft ein Vakuumventil, mit einem Gehäuse, wobei das Gehäuse mindestens eine erste Anschlussöffnung und mindestens eine zweite Anschlussöffnung aufweist, und wobei mindestens ein erster Strömungspfad zwischen der ersten Anschlussöffnung und der zweiten Anschlussöffnung und mindestens ein zweiter Strömungspfad zwischen einer Gehäuseöffnung und der zweiten Anschlussöffnung ausgebildet sind.

Vakuumventile sind im Stand der Technik in einer Vielzahl von Ausgestaltungen bekannt und dienen unter anderem dem Schalten von externem Vakuum. Das externe Vakuum wird durch eine Vakuumpumpe erzeugt, die einen Unterdruck erzeugt, der beispielsweise konstant an einem Anschluss des Vakuumventils anliegt. Vakuumventile sind in unterschiedlichen Größen verfügbar, die je nach Volumenstrom ausgewählt werden. Dabei wird unterschieden zwischen 2/2-Wege- oder 3/2-Wege-Ausführungen.

Vakuumventile werden in der industriellen Fertigung zur Betätigung von pneumatischen Werkzeugen eingesetzt, bei denen ein sehr schneller Wechsel 20 zwischen Saugen und Ablassen des Vakuumkreislaufs - Loslasssen - erforderlich ist. Solche Werkzeuge sind beispielsweise Greif- und Ansaugvorrichtungen, Saugstapler, Sacköffner und Roboter. Bei Anwendungen, bei denen ein schnelles Ablassen des Kreislaufs erforderlich ist, werden häufig 3/2-Wege-Ventile eingesetzt, da diese eine schnelle Belüftung ermöglichen. Sehr häufig kommen pneumatisch vorgesteuerte Elektromagnetventile zum Einsatz, die über einen Kolben verfügen, der in Abhängigkeit von seiner Position verschiedene Strömungspfade im Vakuumventil freigibt.

Die aus dem Stand der Technik bekannten Vakuumventile weisen den Nachteil auf, dass sehr hohe Schaltfrequenzen zwischen Ansaugen und Ablassen nur durch eine aufwendige Ventilsteuerung ermöglicht werden können.

Ein gattungsgemäßes Vakuumventil ist aus der US 2011/042886 A1 bekannt.

Ausgehend von dem vorgenannten Stand der Technik liegt der vorliegenden Erfindung die Aufgabe zugrunde, ein Vakuumventil anzugeben, das mit einer
einfachen Ventilsteuerung eine hohe Schaltfrequenz zwischen Ansaugen und Ablassen ermöglicht.

Die vorgenannte Aufgabe ist bei einem erfindungsgemäßen Vakuumventil dadurch gelöst, dass der erste Strömungspfad durch mindestens eine drehbare erste Steuerscheibe und der zweite Strömungspfad durch mindestens eine drehbare zweite Steuerscheibe freigebbar und verschließbar sind, und dass die erste Steuerscheibe und die zweite Steuerscheibe derart ansteuerbar sind, dass der erste Strömungspfad und der zweite Strömungspfad abwechselnd freigegeben und geschlossen werden.

Die erste Anschlussöffnung dient vorzugsweise dem Anschluss eines externen Vakuums, folglich also dem Anschluss der Verbindung zur Vakuumpumpe. Die zweite Anschlussöffnung dient als Arbeitsanschluss und ist diejenige Anschlussöffnung, an der in einer bestimmten Frequenz ein Saugen oder ein Ablassen erfolgt. Die zweite Anschlussöffnung ist über den ersten Strömungspfad mit der ersten Anschlussöffnung verbunden, so dass bei freigegebenem ersten Strömungspfad ein Unterdruck - Vakuum - an der zweiten Anschlussöffnung anliegt.

Die zweite Anschlussöffnung ist ferner über den zweiten Strömungspfad mit der Gehäuseöffnung verbunden. Die Gehäuseöffnung bildet eine Verbindung zur Umgebung des Ventils, so dass an der Gehäuseöffnung Umgebungsdruck anliegt, folglich also bei geöffnetem zweiten Strömungspfad Umgebungsdruck auch an der zweiten Anschlussöffnung anliegt.

Für den Fachmann ist ersichtlich, dass das erfindungsgemäße Ventil nicht nur zum Schalten eines Vakuums geeignet ist, sondern auch zum Schalten eines Überdrucks geeignet ist, da die durch die Konstruktion definierten Strömungspfade keine konstruktiv bedingten Richtungsvorgaben für die Strömung mit sich bringt oder fordert.

Wenn nun der erste Strömungspfad und der zweite Strömungspfad abwechselnd - durch die erste und zweite Steuerscheibe - geöffnet und geschlossen werden, liegt abwechselnd ein Vakuum oder Umgebungsdruck an der zweiten Anschlussöffnung an, so dass abwechselnd beispielsweise eine an der zweiten Anschlussöffnung vorgesehene Saugvorrichtung einen Gegenstand, z. B. einen Briefumschlag, ansaugt oder ablegt.

Zum Blockieren oder Freigeben der Strömungskanäle werden die Steuerscheiben gedreht, wobei bei bestimmten Drehwinkeln der ersten und der zweiten Steuerscheibe der jeweilige Strömungskanal durch die Steuerscheibe freigegeben oder blockiert ist. Das Verschließen und Freigeben der Strömungskanäle über die rotierenden Steuerscheiben erfolgt durch ein Zusammenwirken von Öffnungen und Überdeckung, beispielsweise indem eine Steuerscheibe nur mit einem Teil ihrer Fläche innerhalb des Strömungskanals verläuft, wobei auf einem bestimmten Abschnitt - oder mehreren Abschnitten - der Steuerscheibe eine Öffnung vorgesehen ist, wobei der Steuerkanal nur freigegeben ist, wenn diese Öffnung in den jeweiligen Strömungskanal gedreht ist. Für alle anderen Drehwinkel, bei denen keine Öffnung vorhanden ist, wird der Strömungskanal durch die Fläche der Steuerscheibe blockiert. Alle Kontaktstellen zwischen sämtlichen Bauteilen sind - falls erforderlich - derart abgedichtet, dass keine Störluft eindringen kann, die den Unterdruck beeinflusst.

Gemäß einer ersten Ausgestaltung des Vakuumventils ist vorgesehen, dass die erste Steuerscheibe und die zweite Steuerscheibe gemeinsam an einer drehbar gelagerten Welle befestigt sind. Durch die Befestigung an der Welle sind die erste Steuerscheibe und die zweite Steuerscheibe bezüglich ihrer Position relativ zueinander festgelegt. Das Freigeben und das Verschließen des ersten Strömungspfades und des zweiten Strömungspfades erfolgt im Betrieb des Vakuumventils durch eine Drehung der Welle, die beide Steuerscheiben mitbewegt. Dadurch wird festgelegt, dass der erste Strömungskanal geschlossen ist, wenn der zweite Strömungskanal geöffnet ist und umgekehrt. Wahlweise ist zur Erreichung eines gedämpften Übergangs zwischen Ansaugen und Ablassen auch ein Schlupf zwischen der Freigabe und der Verschließung der Strömungskanäle vorgesehen, nämlich derart, dass der erste Strömungskanal noch nicht vollständig geschlossen ist, wenn der zweite Strömungskanal bereits geöffnet wird und umgekehrt.

Die Welle ist drehbar im Gehäuse des Vakuumventils gelagert, vorzugsweise mit Lagern, die als Kugellager ausgestaltet sind. Die erste Steuerscheibe und die zweite Steuerscheibe sind vorzugsweise mit Buchsen kraft- und/oder formschlüssig an der Welle befestigt, so dass die Position der Steuerscheiben zur Welle festgelegt ist.

Gemäß der Erfindung ist vorgesehen, dass das Gehäuse mindestens ein Volumen umschließt, dass das Volumen wenigstens durch die erste Steuerscheibe in mindestens eine erste Kammer und in mindestens eine zweite Kammer unterteilt ist, insbesondere dass die erste Anschlussöffnung in der ersten Kammer und die zweite Anschlusskammer in der zweiten Anschlusskammer mündet. Das Volumen in dem Gehäuse ist wenigstens durch die erste Steuerscheibe in mindestens eine erste Kammer und mindestens eine zweite Kammer unterteilt. Ausgehend von der ersten Anschlussöffnung sind die erste Kammer und die zweite Kammer Teil des ersten Strömungspfades. Ausgehend von der Gehäuseöffnung ist die zweite Kammer Teil des zweiten Strömungspfades. Die zweite Kammer, in die die zweite Anschlussöffnung mündet, ist somit sowohl Teil des ersten Strömungskanals als auch Teil des zweiten Strömungskanals.
Wenigstens die erste Steuerscheibe dient dabei der Unterteilung des Volumens in die erste Kammer und die zweite Kammer, wobei mit der ersten Steuerscheibe somit der erste Strömungspfad freigebbar und verschließbar ist. Die erste Steuerscheibe wirkt dabei beispielsweise mit einer Rasterscheibe zusammen, die ebenfalls zwischen der ersten Kammer und der zweiten Kammer angeordnet ist und vorzugsweise im Gegensatz zu den Steuerscheiben drehbar auf der Welle gelagert und am Gehäuse fixiert ist. Durch die drehbare Lagerung auf der Welle wird die Rasterscheibe von der Welle nicht mitbewegt. Im Betrieb des Vakuumventils dreht sich die Steuerscheibe relativ zur Rasterscheibe, wodurch abwechselnd der erste Strömungspfad geöffnet und verschlossen wird. Das Freigeben und Verschließen des Strömungspfades erfolgt beispielsweise durch ein Zusammenwirken von Öffnungen in der Rasterscheibe und in der Steuerscheibe. "Zusammenwirken" bedeutet im Sinne der Erfindung stets, dass die beiden Bauelemente derart wechselwirken, dass durch das - rotierende - Zusammenwirken abwechselnd ein Öffnen oder Verschließen des Strömungskanals erfolgt.
Gleichzeitig, jedoch entgegengesetzt zum Rhythmus des ersten Strömungspfades, wird der zweite Strömungspfad durch die zweite Steuerscheibe abwechselnd freigegeben und verschlossen. Durch dieses Zusammenwirken der ersten Steuerscheibe und der zweiten Steuerscheibe die gemeinsam fest auf der Welle befestigt sind, liegt an der zweiten Anschlussöffnung abwechselnd der über die erste Anschlussöffnung aufgebrachte Arbeitsdruck oder der über die Gehäuseöffnung anliegende Umgebungsdruck an der zweiten Anschlussöffnung an.

Als besonders vorteilhaft hat sich gemäß einer weiteren Ausgestaltung herausgestellt, wenn die erste Steuerscheibe und die zweite Steuerscheibe Öffnungen aufweisen, und dass die Öffnungen der ersten Steuerscheibe mit Öffnungen in einem Steg zwischen der ersten Kammer und der zweiten Kammer zusammenwirken, und dass die Öffnungen der zweiten Steuerscheibe mit der Gehäuseöffnung zusammenwirkt, derart dass bei Überdeckung der Öffnungen der ersten Steuerscheibe mit den Öffnungen im Steg bzw. der Öffnungen der zweiten Steuerscheibe mit der Gehäuseöffnung der jeweilige Strömungspfad geöffnet, ansonsten geschlossen ist. Dabei ist vorgesehen, dass der erste Strömungspfad und der zweite Strömungspfad nicht gleichzeitig geöffnet sind.

Der Steg zwischen der ersten Kammer und der zweiten Kammer ist vorzugsweise als Teil des Gehäuses ausgestaltet, ist alternativ aber auch als separates Bauteil im Gehäuse befestigt. Bei Ausgestaltung des Steges als Teil des Gehäuses, weist das Gehäuse zwei Volumina, nämlich die erste Kammer und die zweite Kammer auf. Der Steg ist vorzugsweise als zentrale Hülse in die zweite Kammer erweitert, wobei in der Hülse die Welle mit mindestens einem Lager, vorzugsweise zwei Lagern, gelagert ist.

Der Steg trennt die erste Kammer und die zweite Kammer derart, dass die Kammern lediglich über die Öffnungen in dem Steg miteinander verbunden sind. Durch Verschließen der Öffnungen in dem Steg wird die Verbindung zwischen der ersten Kammer und der zweiten Kammer und damit auch der erste Strömungspfad verschlossen. Das Verschließen erfolgt durch die erste Steuerscheibe, die an der Welle befestigt ist und derart positioniert ist, dass sie flach an dem Steg anliegt.

Wenn nun die erste Steuerscheibe rotiert, überdecken sich entweder abwechselnd die Öffnungen der ersten Steuerscheibe mit den Öffnungen in dem Steg, so dass eine Verbindung zwischen der ersten Kammer und der zweiten Kammer freigegeben wird oder sie überdecken sich nicht, so dass keine Verbindung zwischen der ersten Kammer und der zweiten Kammer gegeben und damit der erste Strömungspfad geschlossen ist. Gleichzeitig liegt die ebenfalls an der Welle befestigte zweite Steuerscheibe an der Gehäuseöffnung an. Die Gehäuseöffnung ist als eine einzige Öffnung oder als eine Mehrzahl von einzelnen Öffnungen vorgesehen. Wie bei der ersten Steuerscheibe erfolgt eine Freigabe des zweiten Strömungskanals bei Überdeckung der Öffnungen der zweiten Steuerscheibe mit der Gehäuseöffnung bzw. den Gehäuseöffnungen oder eine Blockade des Seitensteuerkanals bei Nichtüberdeckung der Öffnungen der zweiten Steuerscheibe mit der Gehäuseöffnung. Rotiert nun die Welle mit der ersten Steuerscheibe und der zweiten Steuerscheibe sind die jeweiligen Öffnungen dabei derart angeordnet, dass abwechselnd eine Freigabe bzw. Blockade des ersten und zweiten Strömungspfades erfolgt. Die Öffnungen in den Steuerscheiben sind vorzugsweise als Bohrungen oder Langlöcher vorgesehen. Vorzugsweise weist eine Steuerscheibe zehn auf einem Kreis angeordnete Bohrungen auf. Der Steg und die Gehäuseöffnung weisen eine entsprechende Anzahl an Öffnungen auf. Mit der Vielzahl an Öffnungen in den Steuerscheiben lässt sich insgesamt ein großer Durchlassquerschnitt realisieren, der ein Grund für die erreichbaren hohen Schaltfrequenzen ist.

Durch diese Ausgestaltung kann mit einer einfachen Mechanik die zweite Anschlussöffnung abwechselnd mit einem Arbeitsdruck, ausgehend von der ersten Anschlussöffnung, und mit Umgebungsdruck, ausgehend von der Gehäuseöffnung, angesteuert werden. Die Frequenz der an der zweiten Anschlussöffnung anliegenden Drücke hängt unter anderem von der Rotationsgeschwindigkeit der Steuerscheiben und dem Abstand und der Anzahl der Öffnungen ab.

Aufgrund der Rotationssymmetrie der ersten Steuerscheibe und der zweiten Steuerscheibe hat es sich als vorteilhaft herausgestellt, wenn die erste Kammer und die zweite Kammer ringförmig um die Welle gebildet sind. Die Welle verläuft dadurch zentral durch die erste und zweite Kammer und auch durch das Gehäuse. Die ringförmige Ausgestaltung der Kammern ermöglicht, dass die Steuerscheiben etwa eine Größe aufweisen, die der Größe der Grundfläche der Kammern entspricht. Dadurch können die Öffnungen zwischen der ersten und der zweiten Kammer auf einer Ringfläche angeordnet werden, die vollständig von der ersten Steuerscheibe abgedeckt wird. Gleiches gilt für die Gehäuseöffnung und die erste Steuerscheibe. Ferner hat diese Ausgestaltung den Vorteil, dass die beiden Anschlussöffnungen um einen beliebigen Winkel versetzt am Gehäuse vorgesehen werden können.

Gemäß der Erfindung ist vorgesehen, dass die Gehäuseöffnung in einem ersten Deckel vorgesehen ist, dass der erste Deckel das Gehäuse und die zweite Kammer abschließt und dass die in dem ersten Deckel vorhandene Gehäuseöffnung mit der zweiten Steuerscheibe zusammenwirkt. Das Gehäuse selbst ist dabei auf der Seite der zweiten Kammer offen und wird durch die Montage des ersten Deckels abgeschlossen. Der erste Deckel ist vorzugsweise mit Schrauben dichtend am Gehäuse angeschraubt.
Innerhalb des ersten Deckels ist die Gehäuseöffnung vorgesehen, die auch als Mehrzahl von Gehäuseöffnungen ausgestaltet sein kann. Die Welle durchtritt den ersten Deckel, so dass die zweite Steuerscheibe von der Außenseite auf dem ersten Deckel - also außerhalb des Gehäuses - dichtend angeordnet ist. Bei einer Rotation der zweiten Steuerscheibe erfolgt abwechselnd eine Überdeckung der Öffnungen der zweiten Steuerscheibe und der Gehäuseöffnung bzw. der Gehäuseöffnungen, wodurch bei einer Überdeckung der zweite Strömungspfad freigegeben wird und bei einer Nichtüberdeckung der zweite Strömungspfad verschlossen ist. Bei einer Überdeckung kann Umgebungsluft in die Gehäuseöffnung eindringen, so dass über den zweiten Strömungspfad Umgebungsdruck an der zweiten Anschlussöffnung anliegt. Der Deckel und die zweite Steuerscheibe sind vorzugsweise flachförmig und plan aneinanderliegend ausgestaltet, was einfach umzusetzen ist. Des Weiteren ist in einer alternativen Ausgestaltung vorgesehen, dass sowohl der Deckel als auch die zweite Steuerscheibe eine Wölbung mit einem gleichen Radius aufweisen und die Öffnungen in dem gewölbten Bereich vorgesehen sind.
Das Vakuumventil ist ferner weitergebildet, indem die erste Kammer durch einen zweiten Deckel zur Umgebung abgeschlossen ist. Auch auf der Seite der ersten Kammer ist das Gehäuse im nicht montierten Zustand offen, so dass es durch die Montage des zweiten Deckel verschlossen wird, der vorzugsweise mit Schrauben dichtend an dem Gehäuse befestigt wird. Durch den zweiten Deckel wird vorzugsweise auch die Welle nach Außen zur Antriebseinheit geführt. Bei einer alternativen Ausgestaltung ist innerhalb des zweiten Deckels zusätzlich ein Lager angeordnet, das die Welle abstützt.

Zum Antrieb der Welle ist vorzugsweise vorgesehen, dass die Welle direkt von einem Motor angetrieben ist, alternativ indirekt angetrieben ist, insbesondere über eine Verzahnung, einen Riemen oder eine Kette. Der Motor dient dem Antrieb der Welle und damit der Drehung der ersten Steuerscheibe und der zweiten Steuerscheibe, um den ersten Strömungspfad und den zweiten Strömungspfad zu verschließen bzw. freizugeben. Der Motor ist dabei mit seiner Antriebswelle unmittelbar mit der Welle verbunden, so dass ein direkter Antrieb der Welle durch den Motor erfolgt.

Alternativ dazu ist die Welle über eine Übersetzung angetrieben, die beispielsweise als Verzahnung, einen Riemen oder eine Kette ausgestaltet ist. Der Motor ist dann nicht unmittelbar oberhalb des Vakuumventils befestigt, sondern kann in einer beliebigen Position unterhalb, oberhalb oder neben dem Vakuumventil angeordnet werden, wobei die Antriebswelle des Motors über die Übersetzung mit der Welle des Vakuumventils verbunden ist. Der Motor ist vorteilhaft als Servomotor oder als Schrittmotor ausgestaltet.

Das Vakuumventil wird ferner dadurch weitergebildet, dass die Welle an einen Positionsgeber gekoppelt ist, insbesondere der Positionsgeber als fingerförmige Kreisscheibe ausgestaltet ist. Um die Position der Steuerscheiben relativ zu den Öffnungen und damit die Schließeigenschaften des Ventils exakt bestimmten zu können, ist die Kopplung der Welle mit einem nach außen sichtbaren Positionsgeber vorgesehen. Die Ausgangsposition des Positionsgebers ist bekannt, so dass bei beliebiger Position des Positionsgebers an diesem die Position der Steuerscheiben und damit der Status des Vakuumventils ablesbar ist. Insbesondere bei Verwendung eines Schrittmotors hat sich die Verwendung eines Positionsgebers als vorteilhaft herausgestellt. Der Positionsgeber ist beispielsweise als unmittelbar an der Welle befestigte fingerförmige Kreisscheibe ausgestaltet, bei der anhand der Position der Finger die Position der Steuerscheiben bestimmt werden kann. Vorzugsweise wird die Position der Welle und der Steuerscheiben durch einen Sensor erfasst, der die Position der fingerförmigen Kreisscheibe auswertet.

Als vorteilhaft hat sich gemäß einer weiteren Ausgestaltung des Vakuumventils herausgestellt, wenn die erste Steuerscheibe in der ersten Kammer oder alternativ in der zweiten Kammer angeordnet ist. Die erste Steuerscheibe dient dem abwechselnden Verschließen und Öffnen des ersten Strömungspfades zwischen der ersten Kammer und der zweiten Kammer. Die Steuerscheibe lässt sich dadurch vorteilhaft in der ersten Kammer oder der zweiten Kammer anordnen, dass durch das vorhandene Volumen ein ausreichender Freiraum zur Montage der ersten Steuerscheibe und vorzugsweise zur Befestigung der ersten Steuerscheibe an der mit der zweiten Steuerscheibe gemeinsamen Welle vorhanden ist. Die Steuerscheibe ist beispielsweise derart angeordnet, dass die Öffnungen der ersten Steuerscheibe mit Öffnungen in einem Steg des Gehäuses zwischen der ersten Kammer und der zweiten Kammer zusammenwirken. Dabei liegt die Steuerscheibe beispielsweise derart dichtend an dem Steg des Gehäuses an, dass außer durch die Öffnungen in der Steuerscheibe keine Nebenluft an der Steuerscheibe vorbei aus der ersten Kammer in die zweite Kammer gelangen kann.

Gemäß einer weiteren vorteilhaften Ausgestaltung des Vakuumventils ist vorgesehen, dass die Steuerscheibe mit einer Spannkraft belastet ist, insbesondere die Spannkraft in Achsrichtung der Welle wirkt. Im Montagezustand ist die Steuerscheibe drehfest, aber axial - zumindest partiell - auf der Welle beweglich gelagert, so dass die Spannkraft die erste Steuerscheibe in ihrer Position hält und vorzugsweise in einem dichtende Anlage mit dem Steg des Gehäuses presst. Die Steuerscheibe ist vorteilhaft derart auf der Welle befestigt, dass ein Drehmoment von der Welle auf die erste Steuerscheibe übertragbar ist. Im drehenden Zustand überdecken sich die Öffnungen in der ersten Steuerscheibe temporär, so dass der erste Strömungspfad abwechselnd verschlossen und geöffnet wird.

Durch die kontinuierlich auf die erste Steuerscheibe wirkende Spannkraft wird die dichtende Anlage zwischen der Steuerscheibe und dem Steg des Gehäuses verbessert, so dass keine Nebenluft außer durch die Öffnungen der ersten Steuerscheibe an der ersten Steuerscheibe vorbei in die zweite Kammer gelangen kann. Die Spannkraft hat ferner den Vorteil, dass sich die erste Steuerscheibe auch bei Vibrationen, denen das Vakuumventil ausgesetzt ist, nicht aus ihrer Position löst, sondern kontinuierlich in eine Anlageposition gedrückt wird. Vorzugsweise wirkt die Spannkraft in Achsrichtung der Welle, so dass die erste Steuerscheibe, die vorzugsweise an der drehbar gelagerten Welle befestigt ist, in dichtendem Kontakt mit dem Steg des Gehäuses gehalten wird.

In diesem Zusammenhang hat sich eine weitere Ausgestaltung dadurch als vorteilhaft herausgestellt, dass eine Feder vorhanden ist, dass die Feder auf die erste Steuerscheibe einwirkt, insbesondere dass die Feder als Spiralfeder ausgestaltet ist, und dass die Feder um die Welle angeordnet ist. Die Steuerscheibe ist auch bei dieser Ausgestaltung drehfest, aber - zumindest partiell - axial beweglich auf der Welle befestigt, so dass ein Drehmoment auf die erste Steuerscheibe übertragbar ist, jedoch die erste Steuerscheibe gleichzeitig axial bewegbar ist. Dazu ist beispielweise ein Stift vorgesehen, der die Welle durchtritt und der mit einer Nut in der ersten Steuerscheibe zusammenwirkt, so dass der die erste Steuerscheibe in Axialrichtung der Welle bewegbar ist und der Stift das Drehmoment von der Welle auf die erste Steuerscheibe überträgt.

Die erste Steuerscheibe wird durch eine Feder, die eine kontinuierliche Spannkraft auf die erste Steuerscheibe bewirkt, von dieser in ihrer Position gehalten bzw. in einer Anlageposition mit dem Steg des Gehäuses gehalten. Vorzugsweise stützt sich die Feder auf einem an der Welle befestigten Sicherungsring ab, so dass die erste Steuerscheibe zwischen dem Sicherungsring an der Welle und dem Gehäuse, insbesondere dem Steg des Gehäuses, durch die Feder verspannt ist. Besonders bevorzugt ist die Feder als Spiralfeder ausgestaltet und um die Welle angeordnet, so dass sich die Feder vorteilhaft am Sicherungsring an der Welle abstützen kann.

Gemäß einer letzten Ausgestaltung ist vorgesehen, dass die zweite Steuerscheibe von außen auf dem ersten Deckel angeordnet ist, insbesondere dass der erste Deckel eine umlaufende Flanke aufweist, und dass die Flanke die zweite Steuerscheibe umgibt. Die zweite Steuerscheibe ist von außen an dem Gehäuse, insbesondere an dem ersten Deckel befestigt, so dass die Öffnungen der zweiten Steuerscheibe mit den im ersten Deckel vorhandenen Gehäuseöffnungen zusammenwirken. Die Welle durchtritt den ersten Deckel und ist vorzugsweise mit einem Lager innerhalb des ersten Deckels gelagert und mit einer Dichtung abgedichtet. Außerhalb des Gehäuses ist die zweite Steuerscheibe vorteilhaft drehfest an der Welle befestigt, beispielsweise mit einer Buchse. Um eine vorteilhafte Abdichtung und eine zuverlässige Führung der zweiten Steuerscheibe zu gewährleisten, ist vorgesehen, dass der erste Deckel eine umlaufende Flanke aufweist, die die vorzugsweise kreisrunde Steuerscheibe derart umgibt, dass die Stirnseite der Steuerscheibe in Richtung der Flanke orientiert ist. Die Flanke umgibt die Steuerscheibe vollständig, so dass die Steuerscheibe beispielsweise in einer kreisrunden Vertiefung im ersten Deckel angeordnet ist. Die Flanke schützt die Steuerscheibe, indem sie eine Höhe aufweist, die mindestens der Höhe der Steuerscheibe entspricht.

Vorzugsweise ist das Gehäuse druckfest ausgebildet, nämlich dadurch, dass die Wände des Gehäuses derart stark bemessen sind, dass auch ein Hochvakuum ohne Beschädigung des Gehäuses gesteuert werden kann. Das Gehäuse ist vorzugsweise aus einem Vollmaterial gefräst oder alternativ dazu gegossen.

Im Einzelnen gibt es nun eine Vielzahl von Möglichkeiten, das erfindungsgemäße Vakuumventil auszugestalten und weiterzubilden. Dazu wird verwiesen sowohl auf die dem Patentanspruch 1 nachgeordneten Patentansprüche als auch auf die nachfolgenden Ausführungen zu bevorzugten Ausführungsbeispielen in Verbindung mit der Zeichnung. In der Zeichnung zeigen:
- Fig. 1: ein Ausführungsbeispiel eines Vakuumventils mit direktem Antrieb in perspektivischer Ansicht,
- Fig.2: das Ausführungsbeispiel gemäß Fig. 1 in einer geschnittenen Ansicht,
- Fig. 3: ein Ausführungsbeispiel eines Vakuumventils mit Riemenantrieb in perspektivischer Ansicht,
- Fig. 4: das Ausführungsbeispiel gemäß Fig. 3 in einer geschnittenen Ansicht,
- Fig. 5: ein Ausführungsbeispiel eines Vakuumventils mit Verzahnung in perspektivischer Ansicht,
- Fig. 6: das Ausführungsbeispiel gemäß Fig. 5 in einer geschnittenen Ansicht,
- Fig. 7: ein Ausführungsbeispiel eines Vakuumventils mit Riemenantrieb in einer geschnittenen Ansicht, und
- Fig. 8: ein Ausführungsbeispiel eines Vakuumventils mit direktem Antrieb in perspektivischer Ansicht.

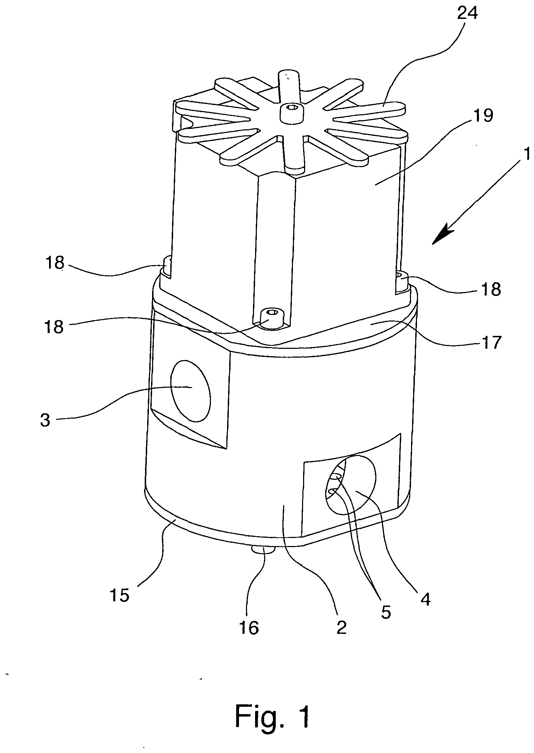

Fig. 1 zeigt ein Vakuumventil 1 mit einem Gehäuse 2 wobei das Gehäuse 2 eine erste Anschlussöffnung 3 und eine zweite Anschlussöffnung 4 aufweist.

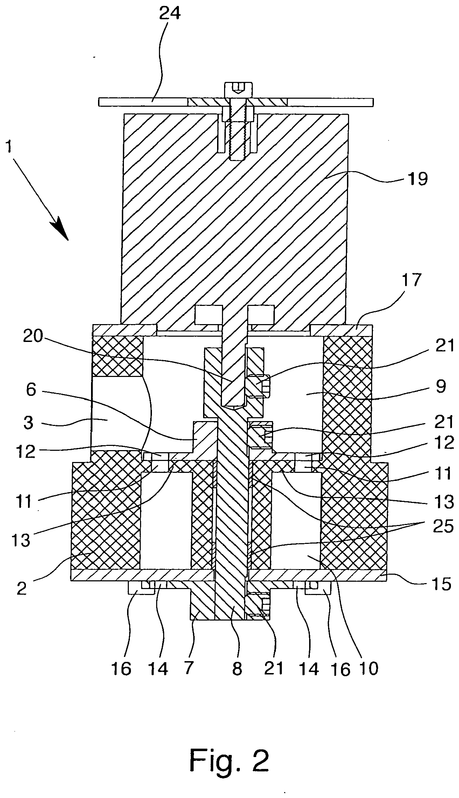

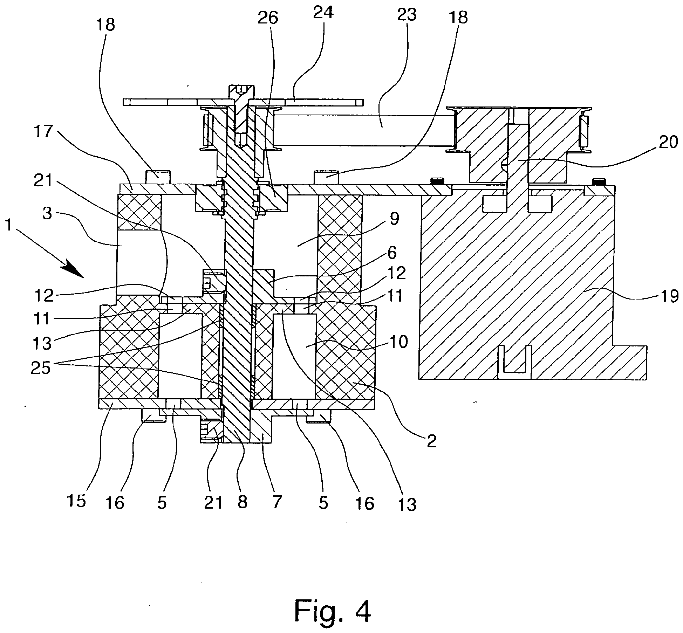

Fig. 2 zeigt das Ausführungsbeispiel gemäß Fig. 1 in einem Schnitt durch die Mittelachse der ersten Anschlussöffnung 3. Zwischen der ersten Anschlussöffnung 3 und der zweiten Anschlussöffnung 4 ist ein erster Strömungspfad ausgebildet. Ein zweiter Strömungspfad ist zwischen einer - nicht dargestellten - Gehäuseöffnung 5 und der - in Fig. 1 dargestellten - zweiten Anschlussöffnung 4 ausgebildet. Die Gehäuseöffnungen 5 sind beispielsweise in dem Ausführungsbeispiel gemäß Fig. 4 dargestellt.

Fig. 2 ist ferner zu entnehmen, dass im ersten Strömungspfad eine drehbare erste Steuerscheibe 6 und im zweiten Strömungspfad eine drehbare zweite Steuerscheibe 7 angeordnet ist. Mit der ersten Steuerscheibe 6 ist der erste Strömungspfad zwischen erster Anschlussöffnung 2 und zweiter Anschlussöffnung 4 freigebbar und verschließbar. Mit der zweiten Steuerscheibe 7 ist der zweite Strömungspfad zwischen Gehäuseöffnung 5 und zweiter Anschlussöffnung 4 freigebbar und verschließbar. Die erste Steuerscheibe 6 und die zweite Steuerscheibe 7 sind bei diesem Ausführungsbeispiel auf einer drehbar gelagerten Welle 8 befestigt.

Innerhalb des Gehäuses 2 ist ein erstes Volumen vorhanden, das eine erste Kammer 9 bildet. Ferner ist in dem Gehäuse 2 ein zweites Volumen vorhanden, das eine zweite Kammer 10 bildet. Die erste Kammer 9 und die zweite Kammer 10 sind Teil des ersten Strömungspfades zwischen erster Anschlussöffnung 3 und zweiter Anschlussöffnung 4. Die zweite Kammer 10 ist Teil des zweiten Strömungspfades zwischen Gehäuseöffnung 5 und der zweiten Anschlussöffnung 4. Die erste Kammer 9 und die zweite Kammer 10 erstrecken sich jeweils ringförmig um die Welle 8. Die erste Kammer 9 und die zweite Kammer 10 sind mit einer Mehrzahl von Öffnungen 11 miteinander verbunden. Die erste Steuerscheibe 6, die am Übergang zwischen der ersten Kammer 9 und der zweiten Kammer 10 angeordnet ist, weist ebenfalls Öffnungen 12 auf, die mit den Öffnungen 11 zwischen der ersten Kammer 9 und der zweiten Kammer 10 zusammenwirken. Die Öffnungen 11 zwischen der ersten Kammer 9 und der zweiten Kammer 10 sind in einen Steg 13 zwischen der ersten Kammer 9 und der zweiten Kammer 10 eingebracht. Der Steg 13 ist als Teil des Gehäuses 2 ausgestaltet und erstreckt sich hülsenartig in das Zentrum der zweiten Kammer 10. Die erste Steuerscheibe 6 liegt flach an dem Steg 13 an und rotiert relativ zum Steg 13, wenn die Welle 8 angetrieben wird.

Des Weiteren weist auch die zweite Steuerscheibe 7 Öffnungen 14 auf, die mit den Gehäuseöffnungen 5 zusammenwirken. Bei diesem Ausführungsbeispiel gemäß Fig. 2 sind die Gehäuseöffnungen 5 in einem ersten Deckel 15 vorgesehen, der das Gehäuse 2 und damit auch die zweite Kammer 10 abschließt. Der erste Deckel 15 ist mit Schrauben 16 am Gehäuse 2 befestigt.

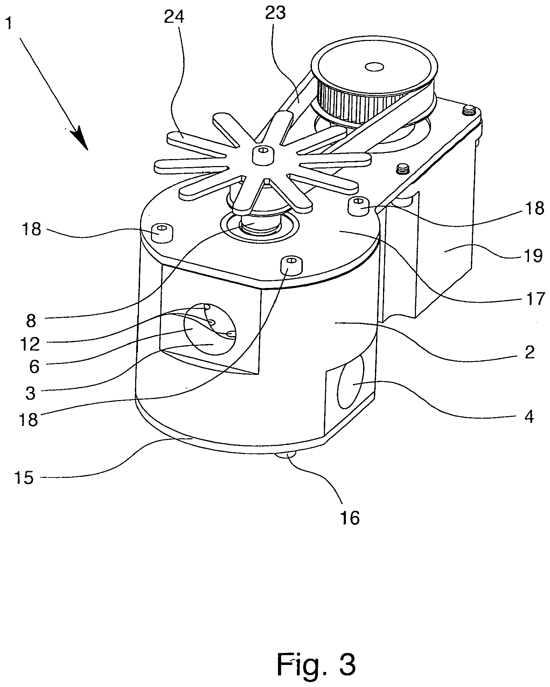

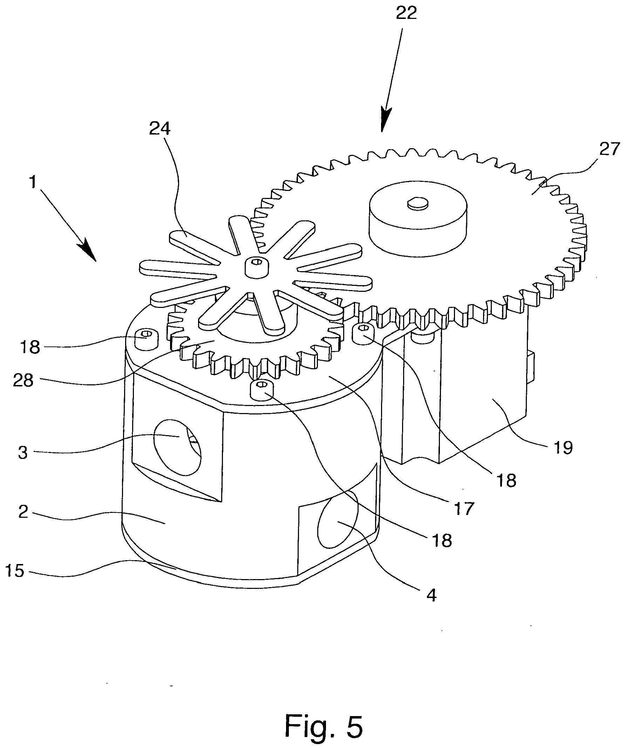

Auch die gegenüberliegende Seite des Gehäuses 2 ist mit einem zweiten Deckel 17 verschlossen, der ebenfalls mit Schrauben 18 an dem Gehäuse 2 angeschraubt ist. Neben dem Deckel 17 ist mit den Schrauben 18 ein bei diesem Ausführungsbeispiel unmittelbar auf dem Gehäuse 2 angeordneter Motor 19 an dem Gehäuse 2 befestigt. Die Antriebswelle 20 des Motors 19 ist unmittelbar über eine Schraube 21 mit der Welle 8 verbunden. Alternativ zu einer direkten Verbindung zwischen Antriebswelle 20 des Motors 19 und der Welle 8 ist auch eine Kopplung über eine Verzahnung 22 gemäß Fig. 5 oder einen Riemen 23 gemäß Fig. 3 vorgesehen.

Bei dem Ausführungsbeispiel gemäß Fig. 1 und 2 ist ferner ein Positionsgeber 24 vorgesehen, der bei diesem Ausführungsbeispiel als fingerförmige Kreisscheibe ausgestaltet ist. Der Positionsgeber 24 dient dazu, die exakte Position der ersten Steuerscheibe 6 und der zweiten Steuerscheibe 7 relativ zum Gehäuse 2 bzw. zu den Gehäuseöffnungen 5 und den Öffnungen 11 anzuzeigen.

So wie auch die Antriebswelle 20 des Motors 19 über eine Buchse 21 an der Welle 8 befestigt ist, sind auch die erste Steuerscheibe 6 und die zweite Steuerscheibe 7 über Schrauben 21 an der Welle 8 befestigt. Die Welle 8 ist bei diesem Ausführungsbeispiel über zwei Lager 25 im Gehäuse 2, nämlich an der hülsenartigen Erweiterung des Steges 13 gelagert. Die Lager 25 sind hier als Kugellager ausgestaltet.

Fig. 3 zeigt ein weiteres Ausführungsbeispiel eines Vakuumventils 1. Bei diesem Ausführungsbeispiel ist der Motor 19 im Gegensatz zum Ausführungsbeispiel gemäß Fig. 1 und 2 nicht unmittelbar auf dem Gehäuse 2 des Vakuumventils 1 angeordnet, sondern seitlich an dem Deckel 17 befestigt und über einen Riemen 23 mit der Welle 8 des Vakuumventils 1 verbunden. Der Positionsgeber 24 befindet sich oberhalb des Riemens 23. Die erste Anschlussöffnung 3 und die zweite Anschlussöffnung 4 sind auch bei diesem Ausführungsbeispiel um 90° versetzt am Gehäuse 2 angeordnet. Mit Ausnahme des Antriebs der Welle 8 ist dieses Ausführungsbeispiel des Vakuumventils 1 identisch zu dem Ausführungsbeispiel gemäß den Fig. 1 und 2 ausgestaltet. Eine weitere Ausnahme ist, dass die Welle 8 ein zusätzliches Lager 26 aufweist, mit dem die Welle 8 im zweiten Deckel 17 gelagert ist. Auch bei diesem Ausführungsbeispiel wirken die Öffnungen 12 in der ersten Steuerscheibe 6 mit den Öffnungen 11 in dem Steg 13 zusammen, um den ersten Strömungspfad zu öffnen und zu schließen. Ferner wirken auch die Gehäuseöffnungen 5 mit den in Fig. 4 nicht dargestellten Öffnungen 14 der zweiten Steuerscheibe 7 zusammen, um den zweiten Strömungspfad zu öffnen und zu schließen.

Fig. 5 zeigt ein weiteres Ausführungsbeispiel eines Vakuumventils 1. Auch bei diesem Ausführungsbeispiel ist der Motor 19 nicht unmittelbar am Gehäuse 2 befestigt, sondern an dem zweiten Deckel 17 befestigt und über eine Verzahnung 22, nämlich über ein erstes Zahnrad 27 und ein zweites Zahnrad 28, mit der Welle 8 gekoppelt.

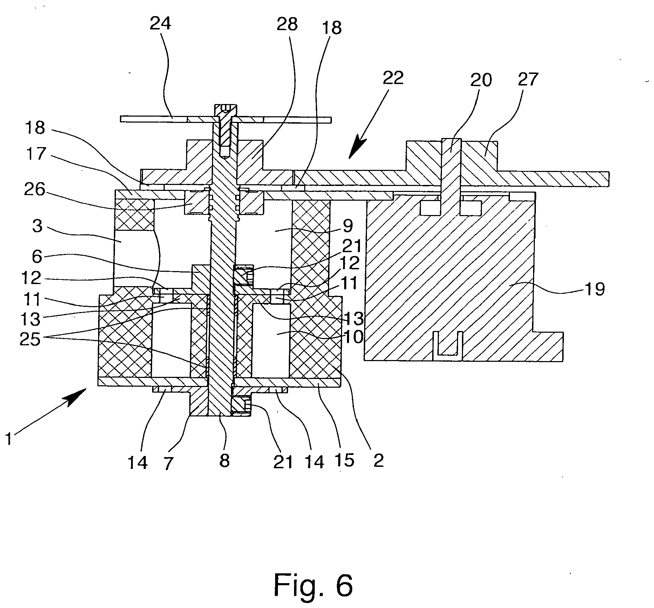

Fig. 6 zeigt einen Schnitt des Ausführungsbeispiels gemäß Fig. 5 in der Ebene der Mittelachse der ersten Anschlussöffnung 3. Mit Ausnahme des Antriebs der Welle 8 ist dieses Ausführungsbeispiel identisch mit dem Ausführungsbeispiel gemäß den Fig. 3 und 4. Die Welle 8 ist auch hier über zwei Lager 25 und ein weiteres Lager 26 im Gehäuse 2 bzw. am Deckel 17 gelagert. Die erste Steuerscheibe 6 und die zweite Steuerscheibe 7 sind jeweils mit Schrauben 21 an der Welle 8 befestigt. Die Welle 8 ist fest mit dem zweiten Zahnrad 28 verbunden, das mit einem ersten Zahnrad 27 verzahnt ist. Das erste Zahnrad 27 wird durch die Antriebswelle 20 des Motors 19 angetrieben, so dass ein indirekter Antrieb der Welle 8 durch den Motor 19 erfolgt. Der Motor 19 ist an dem erweiterten zweiten Deckel 17 befestigt. Das Zusammenwirken der ersten Steuerscheibe 6 - der Öffnungen 12 der Steuerscheibe 6 - mit den Öffnungen 11 im Steg 13 und der zweiten Steuerscheibe 7 mit ihren Öffnungen 14 und den nicht dargestellten Gehäuseöffnungen 5 im Deckel 15 erfolgt derart, dass der erste Strömungspfad und der zweite Strömungspfad abwechselnd geöffnet und geschlossen werden, so dass an der Anschlussöffnung 4 abwechselnd ein Vakuum bzw. Umgebungsdruck anliegt.

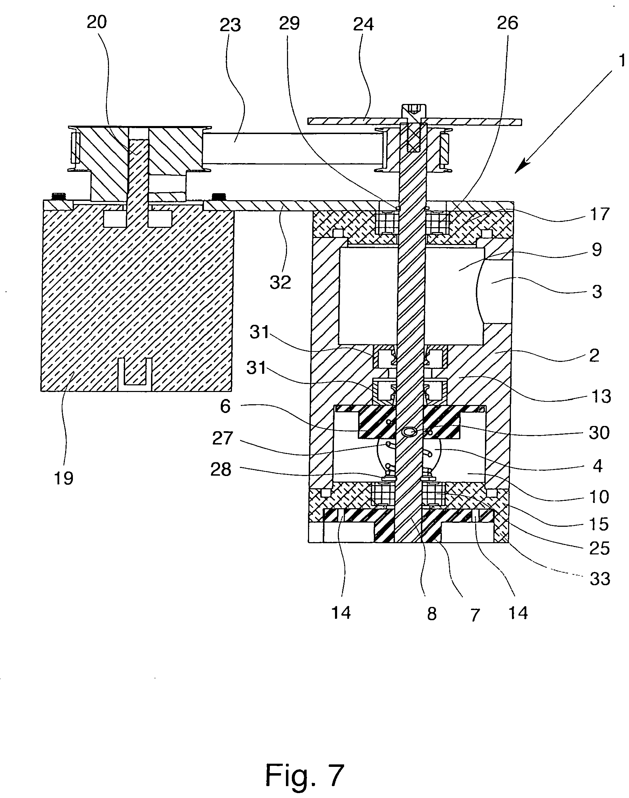

Fig. 7 zeigt ein Ausführungsbeispiel eines Vakuumventils 1 mit Riemenantrieb in geschnittener Seitenansicht. Das Gehäuse 2 des Vakuumventils 1 verfügt über eine erste Anschlussöffnung 3 und eine zweite Anschlussöffnung 4, wobei die erste Anschlussöffnung 3 in einer ersten Kammer 9 und die zweite Anschlussöffnung 4 in der zweiten Kammer 10 mündet. Zwischen der ersten Kammer 9 und der zweiten Kammer 10 ist ein Steg 13 vorgesehen, der die erste Kammer 9 und die zweite Kammer 10 mit - in dieser Figur nicht dargestellten - Öffnungen verbindet. Der Steg 13 erstreckt sich als Trennmittel zwischen der ersten Kammer 9 und der zweiten Kammer 10. Das Gehäuse 2 wird auf seiner gesamten Länge von der Welle 8 durchtreten. Die Welle 8 ist mit einem Lager 25 und mit einem Lager 26 gelagert. Das Lager 25 ist im ersten Deckel 15 und das Lager 26 im zweiten Deckel 17 angeordnet.

Auf der Welle 8 sind die erste Steuerscheibe 6 und die zweite Steuerscheibe 7 befestigt. Die erste Steuerscheibe 6 liegt am Steg 13 des Gehäuses 2 an. Um das Anliegen der ersten Steuerscheibe 6 am Steg 13 des Gehäuses 2 zu verbessern, wodurch die Abdichtung zwischen der ersten Steuerscheibe 6 und dem Steg 13 verbessert wird, ist eine Feder 27 vorgesehen, die um die Welle 8 angeordnet ist. Die Feder 27 stützt sich an einem an der Welle 8 befestigten Sicherungsring 28 ab und wirkt auf der anderen Seite auf die erste Steuerscheibe 6. Die Feder 27 verursacht eine Spannkraft zwischen dem Sicherungsring 28 und der ersten Steuerscheibe 6, so dass die erste Steuerscheibe 6 gegen den Steg 13 verspannt ist. Die Welle 8 wird durch die Feder 27 in das Gehäuse 2 - gemäß Fig. 7 von oben - hineingezogen, wobei sich die Feder 27 am Lager 26 im zweiten Deckel 17 mit einem zweiten Sicherungsring 29 abstützt. Die erste Steuerscheibe 6 wird somit durch die Feder 27 zwischen dem Steg 13 des Gehäuses 2 und der Welle 8, insbesondere dem Sicherungsring 28, verspannt.

Die erste Steuerscheibe 6 ist drehfest aber - zumindest teilweise - axial beweglich auf der Welle 8 befestigt. Dazu ist ein Stift 30 vorgesehen, der die Welle 8 durchtritt und der mit einer Nut in der ersten Steuerscheibe 6 zusammenwirkt. Durch den Stift 30 wird das Drehmoment von der Welle 8 auf die Steuerscheibe 6 übertragen. Dadurch, dass sich der Stift 30 in Axialrichtung der Welle 8 innerhalb der Nut bewegen kann, wird die erste Steuerscheibe 6 dynamisch durch die Feder 27 gegen den Steg 13 gedrückt.

Zur Abdichtung des Durchtritts der Welle 8 durch den Steg 13 des Gehäuses 2 sind zwei Dichtringe 31 im Steg 13 angeordnet, die gegen die drehbar gelagerte Welle 8 abdichten. Die Dichtringe 31 sind von der ersten Kammer 9 bzw. von der zweiten Kammer 10 zugänglich. Die Welle 8 wird von einem Riemen 23 angetrieben, der mit einer Antriebswelle 20 eines Motors 19 verbunden ist. Der Motor 19 ist mit dem Gehäuse 2 gemeinsam an einer Platte 32 befestigt, wobei die Platte 32 am zweiten Deckel 17 des Gehäuses 2 und am Motor 19 befestigt ist.

Die zweite Steuerscheibe 7, ist von außen am Gehäuse 2, insbesondere am ersten Deckel 15 angeordnet, und ist von einer Flanke 33 des Deckels 15 umgeben, die zur Führung der zweiten Steuerscheibe 7 dient und zur vorteilhaften Abdichtung zwischen zweiter Steuerscheibe 7 und dem ersten Deckel 15 beiträgt. Sowohl der erste Deckel 15 als auch der zweite Deckel 17 sind lösbar am Gehäuse 2 befestigt.

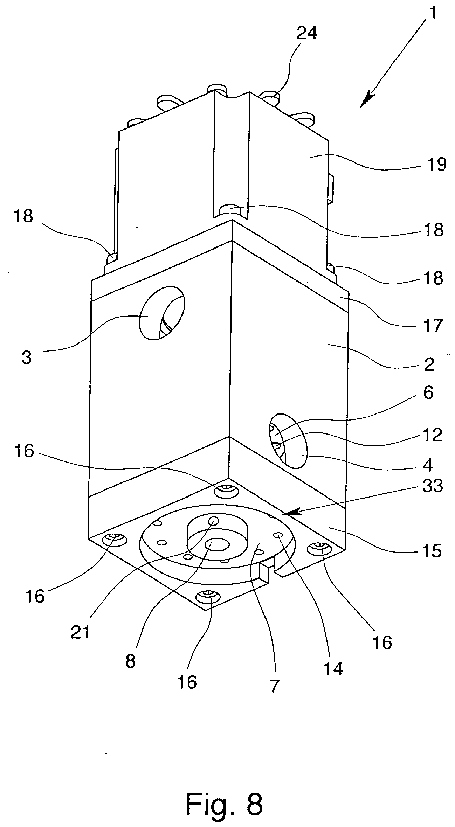

Fig. 8 zeigt ein weiteres Ausführungsbeispiel eines Vakuumventils 1 in perspektivischer Ansicht. Das Gehäuse 2 verfügt über eine erste Anschlussöffnung 3 und eine zweite Anschlussöffnung 4. Der erste Deckel 15 ist mit Schrauben 16 am Gehäuse 2 befestigt. Die erste Steuerscheibe 15 ist mit einer Buchse 21 an der Welle 8 befestigt. Der erste Deckel 15 verfügt über eine umlaufende Flanke 33, die die zweite Steuerscheibe 7 umgibt und zu einer vorteilhafte Abdichtung und Führung der zweiten Steuerscheibe 7 beiträgt. Die Höhe der Flanke 33 entspricht etwa der Höhe der zweiten Steuerscheibe 7. Auf der dem ersten Deckel 15 gegenüberliegenden Seite des Gehäuses 2 ist der zweite Deckel 17 angeordnet. Unmittelbar an dem zweiten Deckel 17 ist mit Schrauben 18 der Motor 19 befestigt. Auf dem Motor 19 ist der Positionsgeber 24 angeordnet.

## Patentansprüche

1. Vakuumventil (1), mit einem Gehäuse (2) das mindestens ein Volumen umschließt, wobei das Gehäuse (2) mindestens eine erste Anschlussöffnung (3) und mindestens eine zweite Anschlussöffnung (4) aufweist und mindestens ein erster Strömungspfad zwischen der ersten Anschlussöffnung (3) und der zweiten Anschlussöffnung (4) sowie mindestens ein zweiter Strömungspfad zwischen einer Gehäuseöffnung (5) und der zweiten Anschlussöffnung (4) ausgebildet sind und der erste Strömungspfad durch mindestens eine drehbare erste Steuerscheibe (6) und der zweite Strömungspfad durch mindestens eine drehbare zweite Steuerscheibe (7) freigebbar und verschließbar sind, und die erste Steuerscheibe (6) und die zweite Steuerscheibe (7) derart ansteuerbar sind, dass der erste Strömungspfad und der zweite Strömungspfad abwechselnd freigegeben und geschlossen werden, **dadurch gekennzeichnet, dass** das Volumen wenigstens durch die erste Steuerscheibe (6) in mindestens eine erste Kammer (9) und in mindestens eine zweite Kammer (10) unterteilt ist, dass die Gehäuseöffnung (5) in einem ersten Deckel (15) vorgesehen ist, dass der erste Deckel (15) das Gehäuse (2) und die zweite Kammer (10) abschließt, dass die in dem ersten Deckel (15) vorhandene Gehäuseöffnung (5) mit der zweiten Steuerscheibe (7) zusammenwirkt, und dass die zweite Steuerscheibe (7) von außen auf dem ersten Deckel (15) angeordnet ist.

2. Vakuumventil (1) nach Anspruch 1, **dadurch gekennzeichnet, dass** die erste Steuerscheibe (6) und die zweite Steuerscheibe (7) gemeinsam an einer drehbar gelagerten Welle (8) befestigt sind.

3. Vakuumventil (1) nach Anspruch 1 oder 2, **dadurch gekennzeichnet, dass** die erste Anschlussöffnung (3) in die erste Kammer (9) und die zweite Anschlussöffnung (4) in die zweiten Kammer (10) mündet.

4. Vakuumventil (1) nach einem der Ansprüche 1 bis 3, **dadurch gekennzeichnet, dass** die erste Steuerscheibe (6) Öffnungen (12) und die zweite Steuerscheibe (7) Öffnungen (14) aufweisen, und dass die Öffnungen (12) der ersten Steuerscheibe (6) mit Öffnungen (11) in einem Steg (13) zwischen der ersten Kammer (9) und der zweiten Kammer (10) zusammenwirken, und dass die Öffnungen (14) der zweiten Steuerscheibe (7) mit der Gehäuseöffnung (5) zusammenwirkt, derart dass bei Überdeckung der Öffnungen (12) der ersten Steuerscheibe (6) mit den Öffnungen (11) im Steg (13) bzw. der Öffnungen (14) der zweiten Steuerscheibe (7) mit der Gehäuseöffnung (5) der jeweilige Strömungspfad geöffnet, ansonsten geschlossen ist.

5. Vakuumventil (1) nach Anspruch 2 oder einem der Ansprüche 3 und 4, wenn sie von Anspruch 2 abhängig sind, **dadurch gekennzeichnet, dass** die erste Kammer (9) und die zweite Kammer (10) ringförmig um die Welle (8) gebildet sind.

6. Vakuumventil (1) nach einem der Ansprüche 1 bis 5, **dadurch gekennzeichnet, dass** die erste Kammer (9) durch einen zweiten Deckel (17) zur Umgebung abgeschlossen ist.

7. Vakuumventil (1) nach einem der Ansprüche 2 und 5, oder einem der Ansprüche 3, 4 und 6, wenn sie von Anspruch 2 abhängig sind, **dadurch gekennzeichnet, dass** die Welle (8) direkt von einem Motor (19) angetrieben ist, alternativ indirekt angetrieben ist, insbesondere über eine Verzahnung (22), einen Riemen (23) oder eine Kette.

8. Vakuumventil (1) nach einem der Ansprüche 2, 5 und 7, oder einem der Ansprüche 3, 4 und 6, wenn sie von Anspruch 2 abhängig sind, **dadurch gekennzeichnet, dass** die Welle (8) an einen Positionsgeber (24) gekoppelt ist, insbesondere der Positionsgeber (24) als fingerförmige Kreisscheibe ausgestaltet ist.

9. Vakuumventil (1) nach einem der Ansprüche 1 bis 8, **dadurch gekennzeichnet, dass** die erste Steuerscheibe (6) in der ersten Kammer (9) oder alternativ in der zweiten Kammer (10) angeordnet ist.

10. Vakuumventil (1) nach einem der Ansprüche 2 bis 9, **dadurch gekennzeichnet, dass** die erste Steuerscheibe (6) mit einer Spannkraft belastet ist, insbesondere die Spannkraft in Achsrichtung der Welle (8) wirkt.

11. Vakuumventil (1) nach einem der Ansprüche 1 bis 10, insbesondere nach einem der Ansprüche 2, 5, 7 und 8, **dadurch gekennzeichnet, dass** eine Feder (27) vorhanden ist, dass die Feder (27) auf die erste Steuerscheibe (6) einwirkt, insbesondere dass die Feder (27) als Spiralfeder ausgestaltet ist, und dass die Feder (27) um die Welle (8) angeordnet ist.

12. Vakuumventil (1) nach einem der Ansprüche 6 bis 11, **dadurch gekennzeichnet, dass** der erste Deckel (15) eine umlaufende Flanke (33) aufweist, und dass die Flanke (33) die zweite Steuerscheibe (7) umgibt.

## Claims

1. Vacuum valve (1) having a housing (2) which encloses at least one volume, wherein the housing (2) has at least one first connection opening (3) and at least one second connection opening (4) and at least one first flow path is formed between the first connection opening (3) and the second connection opening (4) and at least one second flow path is formed between a housing opening (5) and the second connection opening (4) and the first flow path can be opened and closed by at least one rotatable first control disc (6) and the second flow path can be opened and closed by at least one rotatable second control disc (7), and the first control disc (6) and the second control disc (7) can be controlled such that the first flow path and the second flow path are opened and closed alternately, **characterised in that** the volume is subdivided at least by the first control disc (6) into at least one first chamber (9) and into at least one second chamber (10), **in that** the housing opening (5) is provided in a first cover (15), **in that** the first cover (15) closes the housing (2) and the second chamber (10), **in that** the housing opening (5) present in the first cover (15) cooperates with the second control disc (7), and **in that** the second control disc (7) is arranged on the outside of the first cover (15).

2. Vacuum valve (1) according to claim 1, **characterised in that** the first control disc (6) and the second control disc (7) together are attached to a rotatably mounted shaft (8).

3. Vacuum valve (1) according to claim 1 or 2, **characterised in that** the firstconnection opening(3) leads into the first chamber (9) and the second connection opening (4) into the second chamber (10).

4. Vacuum valve (1) according to one of claims 1 to 3, **characterised in that** the first control disc (6) has openings (12) and the second control disc (7) has openings (14), and **in that** the openings (12) of the first control disc (6) cooperate with openings (11) in a crosspiece (13) between the first chamber (9) and the secondchamber (10), and **in that** the openings (14) of the second control disc (7) cooperate with the housing opening (5), such that when covering the openings (12) of the first control disc (6) with the openings (11) in the crosspiece (13) or the openings (14) of the second control disc (7) with the housing opening (5), the respective flow path is opened, otherwise closed.

5. Vacuum valve (1) according to claim 2 or one of claims 3 and 4 if they are dependent on claim 2, **characterised in that** the first chamber (9) and the second chamber (10) are formed annularly around the shaft (8).

6. Vacuum valve (1) according to one of claims 1 to 5, **characterised in that** the first chamber (9) is closed to the surroundings by a second cover (17).

7. Vacuum valve (1) according to one of claims 2 and 5, or one of claims 3, 4 and 6 if they are dependent on claim 2, **characterised in that** the shaft (8) is driven directly by a motor (19), alternatively is driven indirectly, in particular via a gearing (22), a belt (23) or a chain.

8. Vacuum valve (1) according to one of claims 2, 5 and 7, or one of claims 3, 4 and 6 if they are dependent on claim 2, **characterised in that** the shaft (8) is coupled to a positioner block (24), in particular the positionerblock (24) is designed as a finger-like circular disc.

9. Vacuum valve (1) according to one of claims 1 to 8, **characterised in that** the first control disc (6) is arranged in the first chamber (9) or alternatively in the second chamber (10).

10. Vacuum valve (1) according to one of claims 2 to 9, **characterised in that** the first control disc (6) is loaded with a tension, in particular the tension acts in the axial direction of the shaft (8).

11. Vacuum valve (1) according to one of claims 1 to 10, in particular according to one of claims 2, 5, 7 and 8, **characterised in that** a spring (27) is present, **in that** the spring (27) acts on the first control disc (6), in particular **in that** the spring (27) is designed as a helical spring, and **in that** the spring (27) is arranged around the shaft (8).

12. Vacuum valve (1) according to one of claims 6 to 11, **characterised in that** the first cover (15) has a circulating flank (33), and **in that** the flank (33) surrounds the second control disc (7).

## Revendications

1. Soupape à vide (1), comprenant un carter (2), qui renferme au moins un volume, dans laquelle le carter (2) présente au moins un premier orifice de raccordement (3) et au moins un deuxième orifice de raccordement (4) et au moins un premier trajet d'écoulement entre le premier orifice de raccordement (3) et le deuxième orifice de raccordement (4) ainsi qu'au moins un deuxième trajet d'écoulement entre un orifice de carter (5) et le deuxième orifice de raccordement (4) sont réalisés et le premier trajet d'écoulement peut être dégagé et fermé par au moins un premier disque de commande (6) pouvant tourner et le deuxième trajet d'écoulement peut être dégagé et fermé par au moins un deuxième disque de commande (7) pouvant tourner, et le premier disque de commande (6) et le deuxième disque de commande (7) peuvent être pilotés de telle manière que le premier trajet d'écoulement et le deuxième trajet d'écoulement sont dégagés et fermés en alternance, **caractérisée en ce que** le volume est divisé au moins par le premier disque de commande (6) en au moins un premier compartiment (9) et en au moins un deuxième compartiment (10), que l'orifice de carter (5) est prévu dans un premier couvercle (15), que le premier couvercle (15) ferme de manière hermétique le carter (2) et le deuxième compartiment (10), que l'orifice de carter (5) présente dans le premier couvercle (15) coopère avec le deuxième disque de commande (7), et que le deuxième disque de commande (7) est disposé depuis l'extérieur sur le premier couvercle (15).

2. Soupape à vide (1) selon la revendication 1, **caractérisée en ce que** le premier disque de commande (6) et le deuxième disque de commande (7) sont fixés conjointement au niveau d'un arbre (8) monté de manière à pouvoir tourner.

3. Soupape à vide (1) selon la revendication 1 ou 2, **caractérisée en ce que** le premier orifice de raccordement (3) débouche dans le premier compartiment (9) et le deuxième orifice de raccordement (4) débouche dans le deuxième compartiment (10).

4. Soupape à vide (1) selon l'une quelconque des revendications 1 à 3, **caractérisée en ce que** le premier disque de commande (6) présente des orifices (12) et le deuxième disque de commande (7) présente des orifices (14), et que les orifices (12) du premier disque de commande (6) coopèrent avec des orifices (11) dans une entretoise (13) entre le premier compartiment (9) et le deuxième compartiment (10), et que les orifices (14) du deuxième disque de commande (7) coopèrent avec l'orifice de carter (5) de telle manière qu'en cas de coïncidence des orifices (12) du premier disque de commande (6) et des orifices (11) dans l'entretoise (13) ou des orifices (14) du deuxième disque de commande (7) et de l'orifice de carter (5), le trajet d'écoulement respectif est ouvert, sinon fermé.

5. Soupape à vide (1) selon la revendication 2 ou selon l'une quelconque des revendications 3 et 4, si elles dépendent de la revendication 2, **caractérisée en ce que** le premier compartiment (9) et le deuxième compartiment (10) sont formés de manière à présenter une forme annulaire autour de l'arbre (8).

6. Soupape à vide (1) selon l'une quelconque des revendications 1 à 5, **caractérisée en ce que** le premier compartiment (9) est fermé hermétiquement par un deuxième couvercle (17) par rapport à l'extérieur.

7. Soupape à vide (1) selon l'une quelconque des revendications 2 et 5, ou selon l'une quelconque des revendications 3, 4 et 6 si elles dépendent de la revendication 2, **caractérisée en ce que** l'arbre (8) est entraîné directement par un moteur (19), en variante est entraîné indirectement, en particulier par l'intermédiaire d'une denture (22), d'une courroie (23) ou d'une chaîne.

8. Soupape à vide (1) selon l'une quelconque des revendications 2, 5 et 7, ou selon l'une quelconque des revendications 3, 4 et 6 si elles dépendent de la revendication 2, **caractérisée en ce que** l'arbre (8) est couplé à un capteur de position (24), en particulier que le capteur de position (24) est configuré sous la forme d'un disque circulaire en forme de doigt.

9. Soupape à vide (1) selon l'une quelconque des revendications 1 à 8, **caractérisée en ce que** le premier disque de commande (6) est disposé dans le premier compartiment (9) ou en variante dans le deuxième compartiment (10).

10. Soupape à vide (1) selon l'une quelconque des revendications 2 à 9, **caractérisée en ce que** le premier disque de commande (6) est soumis à la contrainte d'une force de serrage, en particulier la force de serrage agit dans la direction axiale de l'arbre (8).

11. Soupape à vide (1) selon l'une quelconque des revendications 1 à 10, en particulier selon l'une quelconque des revendications 2, 5, 7 et 8, **caractérisée en ce qu'**est présent un ressort (27), que le ressort (27) agit sur le premier disque de commande (6), en particulier que le ressort (27) est configuré sous la forme d'un ressort hélicoïdal, et que le ressort (27) est disposé autour de l'arbre (8).

12. Soupape à vide (1) selon l'une quelconque des revendications 6 à 11, **caractérisée en ce que** le premier couvercle (15) présente un flanc (33) périphérique, et que le flanc (33) entoure le deuxième disque de commande (7).
